# EUROPEAN PATENT APPLICATION

(11) **EP 4 266 587 A1**
(43) Date of publication of application: **25.10.2023**
(21) Application number: 21906179.3
(22) Date of filing: 04.11.2021
(51) Int. Cl.: H04B 1/38, G10G 7/00, G10H 1/00

(54) **COMMUNICATION DEVICE FOR ELECTRONIC MUSICAL INSTRUMENT, ELECTRONIC MUSICAL INSTRUMENT SYSTEM, METHOD, AND PROGRAM**

(30) Priority: 17.12.2020 JP 2020208917
(71) Applicant: Casio Computer Co., Ltd., Tokyo 151-8543 (JP)
(72) Inventor: SUMI Hidetoshi, Hamura-shi, Tokyo 205-8555 (JP); YOSHIDA Takumi, Hamura-shi, Tokyo 205-8555 (JP); KAGAWA Tomoyuki, Hamura-shi, Tokyo 205-8555 (JP); WATANABE Toru, Hamura-shi, Tokyo 205-8555 (JP)
(74) Representative: Plougmann Vingtoft a/s
(86) International application number: PCT/JP2021/040566
(87) International publication number: WO 2022/130815

(57) **Abstract**

A communication device for an electronic musical instrument according to an embodiment of the present disclosure includes: a board on which an antenna that transmits and receives a radio signal, a radio communication module that mutually converts data and the radio signal, a control device that mutually converts the data and a signal for a certain interface, and a connector that transmits and receives the signal for the certain interface to and from an electronic musical instrument are disposed, wherein the connector is disposed such that a longitudinal direction of the connector is substantially perpendicular to a board surface of the board.

## Description

### TECHNICAL FIELD

The present disclosure relates to a communication device for an electronic musical instrument using radio communication, an electronic musical instrument system, a method, and a program.

### BACKGROUND ART

Musical Instrument Digital Interface (MIDI (registered trademark)) is widely used as a format for exchanging data for playing an electronic musical instrument between devices. On the other hand, in recent years when radio communication devices are actively used, a technique of transmitting and receiving MIDI using radio has been studied. For example, MIDI over Bluetooth LE (or BLE MIDI) that transmits and receives MIDI using Bluetooth (registered trademark) Low Energy (Bluetooth LE) has been studied.

In addition, a dongle device that can realize BLE MIDI only by being inserted into a MIDI terminal of an existing electronic musical instrument has been proposed (Patent Literature 1).

### CITATION LIST

### PATENT LITERATURE

Patent Literature 1: JP 2015-179141 A

### SUMMARY OF INVENTION

### TECHNICAL PROBLEM

However, for the existing dongle device for BLE MIDI described in Patent Literature 1 and the like, communication performance has not been highly valued so far (an antenna having good characteristics such as directivity and radiation efficiency was not regarded as important). On the other hand, there is a dongle device that can change the orientation of the antenna, however, there have been issues of difficulty for the user in adjusting the antenna while confirming the communication state, and poor convenience due to the large size of the antenna.

Therefore, an object of the present disclosure is to provide a communication device for an electronic musical instrument, an electronic musical instrument system, a method, and a program capable of realizing favorable communication between an electronic musical instrument and an external communication device.

### SOLUTION TO PROBLEM

A communication device for an electronic musical instrument according to an embodiment of the present disclosure includes: a board on which an antenna that transmits and receives a radio signal, a radio communication module that mutually converts data and the radio signal, a control device that mutually converts the data and a signal for a certain interface, and a connector that transmits and receives the signal for the certain interface to and from an electronic musical instrument are disposed, wherein the connector is disposed such that a longitudinal direction of the connector is substantially perpendicular to a board surface of the board.

### ADVANTAGEOUS EFFECTS OF INVENTION

According to the embodiment of the present disclosure, it is possible to realize favorable communication between an electronic musical instrument and an external communication device.

### BRIEF DESCRIPTION OF DRAWINGS

Fig. 1 is a diagram illustrating an example of a schematic configuration of a system 1 according to an embodiment.
Fig. 2 is a diagram illustrating an example of an appearance of an electronic musical instrument 10 according to an embodiment.
Fig. 3 is a diagram illustrating an example of a hardware configuration of a control system 100 of an electronic musical instrument 10 according to an embodiment.
Figs. 4A and 4B are diagrams illustrating an example of a hardware configuration of a dongle 20 according to an embodiment.
Fig. 5 is a diagram illustrating an example of a hardware configuration of a device 30 according to an embodiment.
Figs. 6A and 6B are diagrams illustrating an example of a printed circuit board (PCB) layout of a dongle 20 and corresponding antenna radiation characteristics according to an embodiment.
Figs. 7A and 7B are diagrams illustrating another example of the PCB layout of a dongle 20 and corresponding antenna radiation characteristics according to an embodiment.
Fig. 8 is a diagram illustrating an example of a size of a dongle 20 according to an embodiment.
Fig. 9 is a diagram illustrating an example of a size of a dongle 20 according to an embodiment.
Fig. 10 is a diagram illustrating an example of a size of a dongle 20 according to an embodiment.
Fig. 11 is a diagram illustrating an example of a size of a dongle 20 according to an embodiment.

### DESCRIPTION OF EMBODIMENTS

Hereinafter, embodiments of the present disclosure will be described in detail with reference to the accompanying drawings. In the following description, the same parts are denoted by the same reference numerals. Since the same parts have the same names, functions, and the like, detailed descriptions thereof will not be repeated.

### (System)

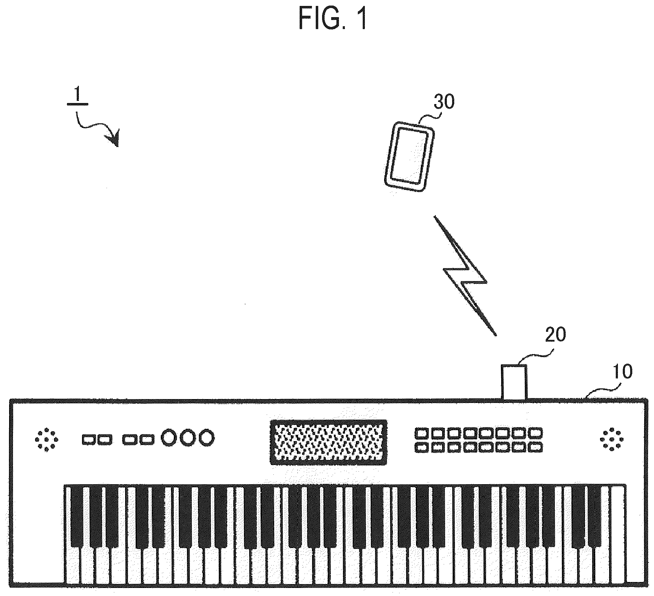

Fig. 1 is a diagram illustrating an example of a schematic configuration of a system 1 according to an embodiment. The system 1 illustrated in Fig. 1 includes an electronic musical instrument 10, a dongle 20, and a device 30. The system 1 may be referred to as a MIDI transmission (or reproduction or execution) system, an electronic musical instrument system, or the like.

The electronic musical instrument 10 is a device that receives an input from a user via an operator such as a keyboard or a switch and controls performance or the like. The electronic musical instrument 10 may be a device having a function of generating a sound according to performance information such as MIDI data. The device may be an electronic musical instrument (electronic piano, synthesizer, and the like), an analog musical instrument equipped with a sensor or the like and configured to have a function equivalent to that of the electronic musical instrument, or an electronic device (an electronic device similar to the device 30 to be described later) not having an operator (keyboard or the like) for playing. Note that, in the present disclosure, the electronic device may mean a name including the electronic musical instrument 10 and other electronic devices. That is, in the present disclosure, the electronic musical instrument 10 may be replaced with the electronic device 10.

The dongle 20 is connected to the electronic musical instrument 10 and relays direct communications to and from the device 30. In the present disclosure, the dongle 20 is assumed to be connected to (mounted on) a universal serial bus (USB) terminal provided on the outer circumferences of the electronic musical instrument 10, but the present disclosure is not limited thereto. In a case where an interface other than the USB is used, the USB of the present disclosure may be implemented by replacing the interface. The dongle 20 may be referred to as a communication device for an electronic musical instrument.

The device 30 is an electronic device that performs communications with the electronic musical instrument 10 (or dongle 20). The device 30 may be a mobile terminal (mobile communication terminal) such as a mobile phone, a smartphone, or a tablet terminal, or may be a fixed communication terminal such as a personal computer (PC), a server, a television, or a game machine. That is, the device 30 in the present disclosure may be read as a communication device, a communication device, a terminal device, or the like.

### <Electronic musical instrument>

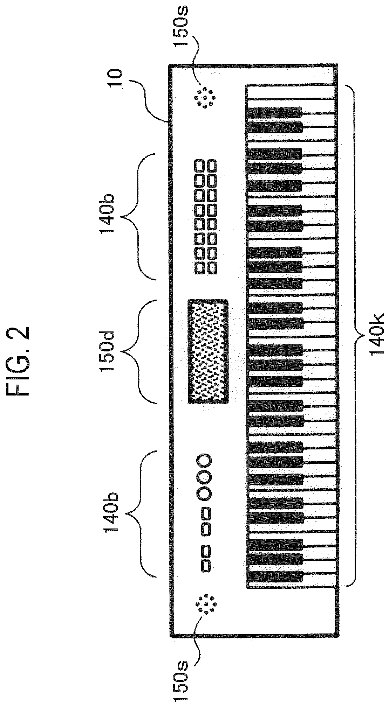

Fig. 2 is a diagram illustrating an example of an appearance of the electronic musical instrument 10 according to an embodiment. The electronic musical instrument 10 may be equipped with a switch (button) panel 140b, a keyboard 140k, a display 150d, a speaker 150s, and the like.

The switch panel 140b may include switches for operating designation of volume, setting of sound source, tone, and the like, selection (accompaniment) of a song (accompaniment), start/stop of song reproduction, setting of song reproduction (tempo and the like), and the like.

The keyboard 140k may have a plurality of keys as performance operators. The key may be referred to as a performance operator, a pitch operator, a tone operator, a direct operator, or the like.

The display 150d may display lyrics, music scores, various setting information, and the like. The speaker 150s may be used to emit sound generated by performance.

Note that the electronic musical instrument 10 may be able to generate and convert at least one of a MIDI message (event) and an Open Sound Control (OSC) message. The "MIDI" of the present disclosure may be any of the MIDI 1.0 standard, the MIDI 2.0 standard, and a standard obtained by correcting/extending the MIDI. In the present disclosure, the MIDI message and the MIDI data may be replaced with each other. Note that the MIDI message may mean a plurality of (for example, several bytes of) MIDI data that functions as one command.

The electronic musical instrument 10 may communicate with a network (such as the Internet) via at least one of wire and radio (for example, Long Term Evolution (LTE), 5th generation mobile communication system New Radio (5G NR), Wi-Fi (registered trademark), Bluetooth, and the like.).

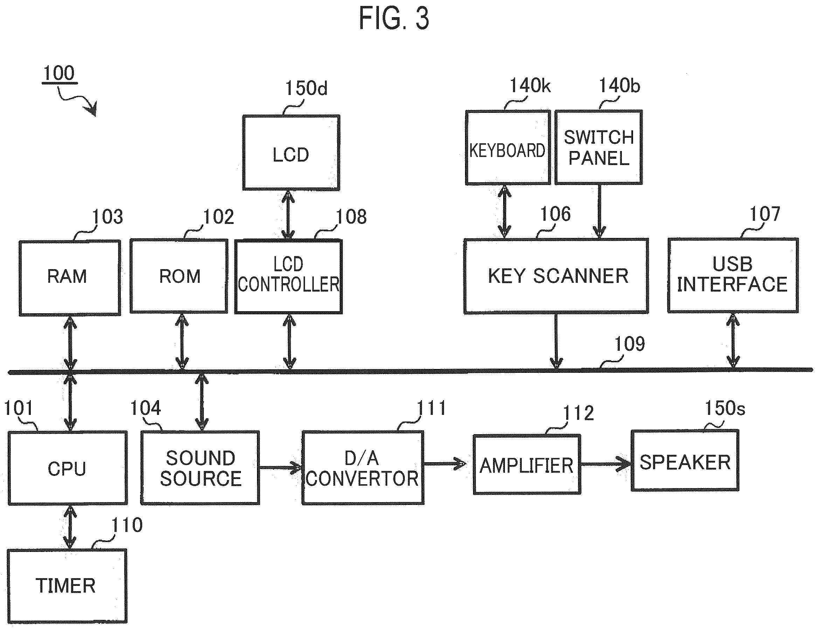

Fig. 3 is a diagram illustrating an example of a hardware configuration of a control system 100 of an electronic musical instrument 10 according to an embodiment.

A central processing unit (CPU) 101, a read only memory (ROM) 102, a random access memory (RAM) 103, a sound source 104, a key scanner 106 to which a switch (button) panel 140b and a keyboard 140k in Fig. 2 are connected, a USB interface 107, an LCD controller 108 to which a liquid crystal display (LCD) as an example of a display 150d in Fig. 2 is connected, and the like are connected to a system bus 109.

A timer 110 (which may be referred to as a counter) for controlling the performance may be connected to the CPU 101. The timer 110 may be used to count the progress of automatic performance in the electronic musical instrument 10, for example. The CPU 101 may be referred to as a processor, and may include an interface with a peripheral circuit, a control circuit, an operation circuit, a register, and the like.

The CPU 101 executes a control operation of the electronic musical instrument 10 in Fig. 2 by executing a control program stored in the ROM 102 while using the RAM 103 as a work memory. In addition to the control program and various types of fixed data, the ROM 102 may store music data, accompaniment data, music (song) data including these, and the like.

The key scanner (scanner) 106 constantly scans a key press/release state of the keyboard 140k in Fig. 2, a switch operation state of the switch panel 140b, and the like, and interrupts the CPU 101 to transmit a change in the states.

The LCD controller 108 is an IC (integrated circuit) that controls a display state of an LCD which is an example of the display 150d.

The sound source 104 generates a digital sound source signal (for example, the waveform data of the musical instrument sound) corresponding to a sound to be produced (note-on) on the basis of note-on/off data input from the CPU 101 on the basis of the key scanner 106, and outputs the digital sound source signal to a Digital to Analog (D/A) converter 111. The sound source 104 may execute processing such as envelope control of the sound to be produced. The sound source 104 may execute speech synthesis processing to generate a signal of synthesized speech.

The D/A converter 111 converts the input digital signal into an analog signal and outputs the analog signal to an amplifier 112. The amplifier 112 may amplify the input signal and output the amplified signal from the speaker 150s or an output terminal (not illustrated).

The USB interface 107 exchanges a signal conforming to the USB standard with the dongle 20 physically connected to the electronic musical instrument 10 using an external connection terminal (for example, a connector). The USB interface 107 may include a USB connector (USB connection terminal).

When the signal input from the USB interface 107 includes MIDI format data (MIDI data), the CPU 101 may perform reproduction processing using the sound source 104. In addition, the CPU 101 may generate MIDI data on the basis of key input information (for example, note on/off) acquired from the key scanner 106, and the like, output the MIDI data to the USB interface 107, and transmit the MIDI data to the device 30 via the dongle 20.

### <Dongle>

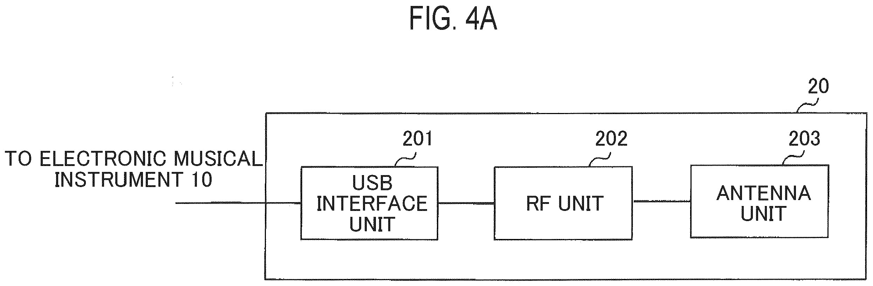

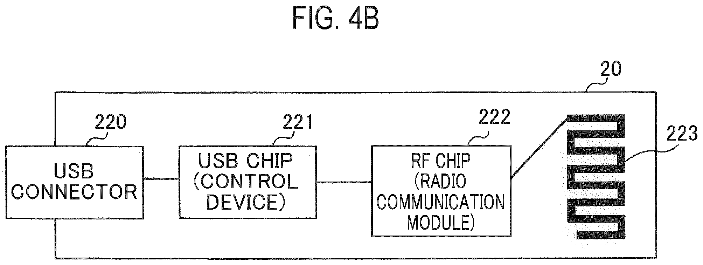

Figs. 4A and 4B are diagrams illustrating an example of a hardware configuration of a dongle 20 according to an embodiment. Fig. 4A is a conceptual diagram of a hardware configuration of the dongle 20. As illustrated in Fig. 4A, the dongle 20 includes, for example, a USB interface unit 201, an RF unit 202, an antenna unit 203, and the like. It should be understood by those skilled in the art that each drawing of the present disclosure merely illustrates a configuration used for description, and may include a configuration such as a power supply (not illustrated).

The USB interface unit 201 relays a signal (for example, a signal including at least one of MIDI data and audio data) conforming to the USB standard between the USB interface 107 and the RF unit 202 in the electronic musical instrument 10. In other words, the USB interface unit 201 has a function of bridging (converting) a signal used in the RF unit and a signal conforming to the USB standard.

For example, the USB interface unit 201 acquires original data from a signal (packet) transmitted via the USB interface 107 of the electronic musical instrument 10 and transfers the original data to the RF unit 202. Furthermore, the USB interface unit 201 includes the data transferred from the RF unit 202 in a USB packet and transmits the packet to the USB interface 107 of the electronic musical instrument 10.

The RF unit 202 realizes transmission and reception of signals using radio communication (for example, Bluetooth, Wi-Fi, or the like).

The RF unit 202 may perform transmission processing such as channel coding (which may include error correction coding), modulation, mapping, filtering, inverse fast Fourier transform (IFFT) processing, or digital-analog conversion on the bit string to be transmitted (for example, MIDI data) transferred from the USB interface unit 201, and output a baseband signal. The RF unit 202 may perform modulation to a radio frequency band, filtering, amplification, and the like on the baseband signal, and transmit a signal in the radio frequency band via the antenna unit 203.

On the other hand, the RF unit 202 may perform amplification, filtering, demodulation into a baseband signal, and the like on the signal in the radio frequency band received by the antenna unit 203. The RF unit 2002 may apply reception processing such as analog-digital conversion, Fast Fourier transform (FFT) processing, filtering, demapping, demodulation, and decoding (which may include error correction decoding) on the acquired baseband signal, acquire the transmitted data (for example, MIDI data), and transfer the acquired data to the USB interface unit 201.

Note that the RF unit 202 may simultaneously perform processing of converting a received radio signal into transmitted data and processing of converting a bit string to be transmitted into a radio signal.

The antenna unit 203 may include at least one of antennas described on the basis of common recognition in the technical field according to the present disclosure, for example, a pattern antenna, a chip antenna, a dipole antenna, an omni antenna, a whip antenna, and the like.

Fig. 4B illustrates an example of an implementation of the arrangement of Fig. 4A. In the present example, the USB interface unit 201 in Fig. 4A includes a USB connector 220 and a USB chip 221. In addition, the RF unit 202 in Fig. 4A includes an RF chip 222. Furthermore, the antenna unit 203 in Fig. 4A is configured with an antenna 223 (pattern antenna).

The USB connector 220 transmits and receives a signal for a USB interface to and from the electronic musical instrument 10. The USB chip 221 mutually converts data (for example, at least one of MIDI data and audio data) and the signal for the USB interface described above.

The RF chip 222 mutually converts the above-described data (for example, at least one of MIDI data and audio data) and a radio signal. Note that the RF chip 222 may be referred to as a radio communication module, or may be referred to as a Bluetooth chip when the radio signal is a Bluetooth signal. The antenna 223 transmits and receives the above-described radio signal.

Note that the USB chip 221 and the RF chip 222 may both include a control device, a processor, a CPU, a micro controller unit (MCU), a memory control unit (MCU), and the like.

Additionally, in the present disclosure, other data (for example, audio data for a musical accompaniment) may be transmitted and received through a USB interface or radio communication simultaneously with MIDI. Furthermore, the USB interface unit 201 of the present disclosure may be replaced with any interface unit that can be connected to and communicate with the electronic musical instrument 10. In this case, the "USB" of the present disclosure may be read as a name related to an arbitrary interface unit, and "a signal conforming to the USB standard" may be read as a signal conforming to a standard with which the arbitrary interface unit conforms.

### <Device>

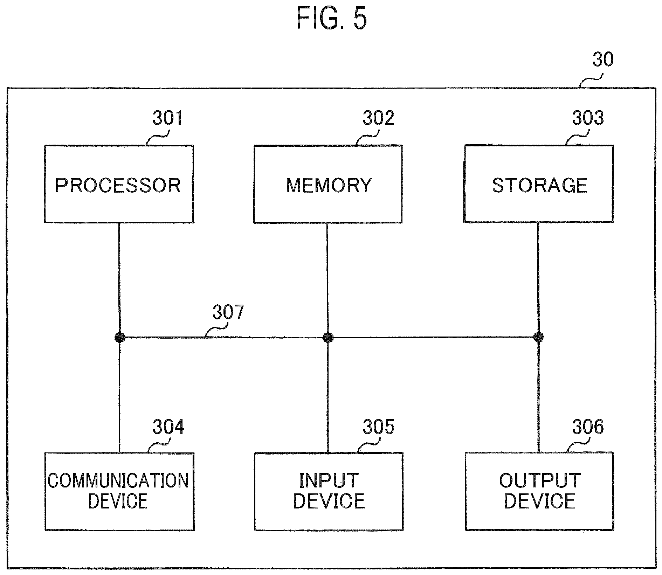

Fig. 5 is a diagram illustrating an example of a hardware configuration of a device 30 according to an embodiment. The device 30 may be physically configured as a computer device including a processor 301, a memory 302, a storage 303, a communication device 304, an input device 305, an output device 306, a bus 307, and the like.

The functions of the device 30 are realized by the processor 301 operating by loading predetermined software (program) on hardware such as the processor 301 and the memory 302, and controlling communication by the communication device 304, reading and/or writing of data in the memory 302 and the storage 303, and the like.

The processor 301 operates, for example, an operating system to control the entire computer. The processor 301 may be configured with a central processing unit (CPU) including an interface with a peripheral device, a control device, an operation device, a register, and the like.

In addition, the processor 301 reads a program (program code), a software module, data, and the like from at least one of the storage 303 and the communication device 304 to the memory 302, and executes various processes according to such data and the like read out. As the program, a program that causes a computer to execute at least a part of the operation described in the embodiment of the present disclosure is used.

The memory 302 is a computer-readable recording medium, and may include, for example, at least one of a read only memory (ROM), an erasable programmable ROM (EPROM), an electrically EPROM (EEPROM), a random access memory (RAM), or other appropriate storage media. The memory 302 may be referred to as a register, a cache, a main memory (main storage device), or the like. The memory 302 may store a program (program code), a software module, and the like that can be executed to implement the method according to an embodiment.

The storage 303 is a computer-readable recording medium, and may include, for example, at least one of a flexible disk, a floppy (registered trademark) disk, a magneto-optical disk (for example, a compact disc (compact disc ROM (CD-ROM) or the like), a digital versatile disc, or a Blu-ray (registered trademark) disc), a removable disk, a hard disk drive, a smart card, a flash memory device (for example, a card, a stick, or a key drive), a magnetic stripe, a database, a server, or other appropriate storage media. The storage 303 may be referred to as an auxiliary storage device.

The communication device 304 is hardware (transmission/reception device) for performing communication between computers via at least one of a wired network and a radio network, and is also referred to as, for example, a network device, a network controller, a network card, a communication module, or the like.

The input device 305 is an input device (for example, a keyboard, a mouse, and the like) that receives an input from the outside. The output device 306 is an output device (for example, a display, a speaker, and the like) that performs output to the outside. Note that the input device 305 and the output device 306 may be configured integrally (for example, the touch panel).

In addition, the respective devices such as the processor 301 and the memory 302 are connected by a bus 307 for communicating information. The bus 307 may be configured by a single bus or may be configured by different buses between devices.

Note that these system configuration and device configuration are merely examples, and the present invention is not limited thereto. For example, the number of circuits included is not limited thereto. Each device may have a configuration not including some circuits (mechanisms), or may have a configuration in which a function of one circuit is implemented by a plurality of circuits. A configuration in which functions of a plurality of circuits are implemented by one circuit may be included.

Furthermore, the electronic musical instrument 10, the dongle 20, and the device 30 may include hardware such as a microprocessor, a digital signal processor (DSP), an application specific integrated circuit (ASIC), a programmable logic device (PLD), and a field programmable gate array (FPGA), and some or all of the functional blocks may be implemented by such hardware. For example, the CPU 101 may be implemented by at least one of these pieces of hardware.

Note that the block diagrams described above illustrate blocks of functional units. These functional blocks (components) are realized by any combination of hardware and/or software. In addition, means for realizing each functional block is not particularly limited. That is, each functional block may be realized by one physically coupled device, or may be realized by a plurality of devices in which two or more physically separated devices are connected by wire or radio.

For example, although only one processor 301 is illustrated, there may be multiple processors. Furthermore, the processing may be executed by one processor, or the processing may be executed simultaneously, sequentially, or by two or more processors using other methods. Note that each functional block may be implemented by one or more chips.

### (Physical configuration of dongle)

A physical configuration of the dongle 20 according to an embodiment of the present disclosure will be described below.

<Printed circuit board layout>

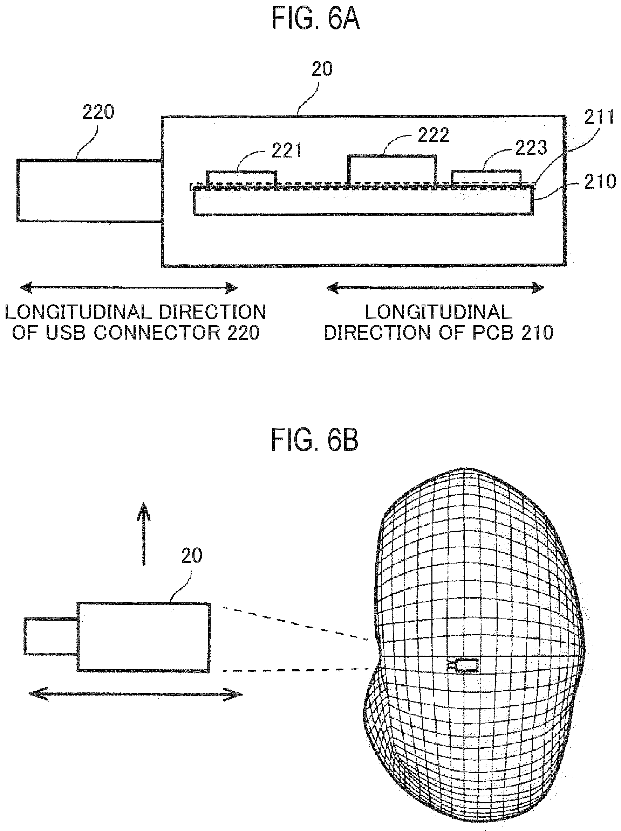

Figs. 6A and 6B are diagrams illustrating an example of a printed circuit board (PCB) layout of a dongle 20 and corresponding antenna radiation characteristics according to an embodiment. In the following drawings, the PCB layout is a schematic diagram, and description of wiring and the like not used for description is omitted.

In Fig. 6A, a PCB 210 is disposed such that a board surface (component surface) 211 is horizontal to the USB connector 220 (or the insertion direction of the USB connector 220, in other words, the longitudinal (or long side or long surface) direction of the USB connector 220). In the present disclosure, the insertion direction of the USB connector 220 may be read as the extending direction of the USB connector 220. Since (the wiring extending from) the USB connector 220 is connected to the component surface 211, the USB connector 220 may be expressed as being arranged on the component surface 211.

In addition, the USB chip 221 on which the USB interface unit 201 is mounted, the RF chip 222 on which the RF unit 202 is mounted, and the antenna 223 on which the antenna unit 203 is mounted are arranged on the component surface 211 of the PCB 210. That is, the antenna 223 extends horizontally with respect to the USB connector 220 (or the insertion direction of the USB connector 220). Note that the USB interface unit 201 in Fig. 4 may include the USB chip 221 and the USB connector 220.

When the PCB layout structure of Fig. 6A is adopted, for example, in a case where a pattern antenna or the like is used for the antenna 223, radio waves are radiated in a donut shape with respect to the insertion direction of the USB connector 220 as illustrated in Fig. 6B, and thus, it is possible to enhance the directivity (radiation characteristics) of the antenna 223 in the vertical direction as compared with the horizontal direction (for example, in the front-back direction) of the electronic musical instrument 10.

In the present disclosure, the fact that X is perpendicular to Y may mean that X is completely perpendicular or substantially perpendicular. Here, X may be an object or a specific surface of the object, and Y may be an object different from X or a specific surface of the object. Note that the fact that X is completely perpendicular to Y may mean that the angle formed by the normal line of (the specific surface of) X and the normal line of (the specific surface of) Y is 90°, and the fact that X is substantially perpendicular to Y may mean that the angle formed by the normal line of (the specific surface of) X and the normal line of (the specific surface of) Y is in the range of 90 - Z° to 90 + Z° (for example, Z may be 0.5, 1, 2, 5, 10, 20, etc.).

According to the configuration of Fig. 6A, favorable communication characteristics can be obtained with respect to the vertical direction of the main body of the electronic musical instrument 10.

On the other hand, in the system of Fig. 1, it is assumed that (the user holding) the device 30 is normally positioned in the horizontal direction to the electronic musical instrument 10. Therefore, the present inventors conceived a verticalization of the arrangement of the PCB with respect to the USB connector in consideration of the radiation characteristics of the antenna (for example, a pattern antenna).

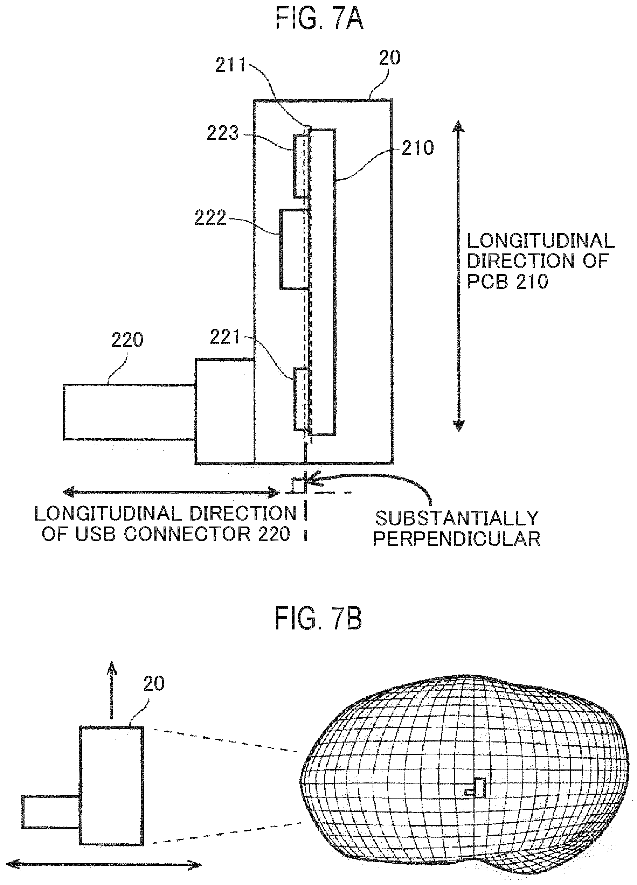

Figs. 7A and 7B are diagrams illustrating another example of the PCB layout of a dongle 20 and corresponding antenna radiation characteristics according to an embodiment.

In Fig. 7A, the PCB 210 is disposed such that the board surface (component surface) 211 is perpendicular to the USB connector 220 (or the insertion direction of the USB connector 220, in other words, the longitudinal (or long side or long surface) direction of the USB connector 220) . Since (the wiring extending from) the USB connector 220 is connected to the component surface 211, the USB connector 220 may be expressed as being arranged on the component surface 211.

In addition, the USB chip 221 on which the USB interface unit 201 is mounted, the RF chip 222 on which the RF unit 202 is mounted, and the antenna 223 on which the antenna unit 203 is mounted are arranged on the component surface 211 of the PCB 210. That is, the antenna 223 extends perpendicularly with respect to the USB connector 220 (or the insertion direction of the USB connector 220).

When the PCB layout structure of Fig. 7A is adopted, for example, in a case where a pattern antenna or the like is used for the antenna 223, radio waves are radiated in a donut shape to the vertical direction of the insertion direction of the USB connector 220 as illustrated in Fig. 7B, and thus, it is possible to enhance the directivity (radiation characteristics) of the antenna 223 in the horizontal direction (for example, in the front-back direction) as compared with the vertical direction of the electronic musical instrument 10.

According to the configuration of Fig. 7A, favorable communication characteristics can be obtained with respect to the horizontal direction of the main body of the electronic musical instrument 10.

As illustrated in Figs. 6A and 7A, it is preferable that the antenna 223 is provided on one end side in the longitudinal (or long side or long surface) direction of the PCB 210, and the USB connector 220 is provided on the other end side.

Note that the antenna unit 203 (antenna 223) of the present disclosure may be implemented by a nondirectional antenna such as a pattern antenna, an omni antenna, or the like (in other words, an antenna capable of emitting or transmitting and receiving radio waves at a uniform level in all directions in a vertical surface with respect to a direction in which the antenna extends).

### <Dongle size>

When the size of the dongle 20 (especially its antenna unit 203) is large, improvement in radiation characteristics and communication quality can be expected. On the other hand, if the dongle 20 is too large, there is a concern that a person/object may collide with the dongle 20 connected to the electronic musical instrument 10, causing the dongle 20 to be impacted and easily damaged. Therefore, the present inventors have studied the size of the dongle 20.

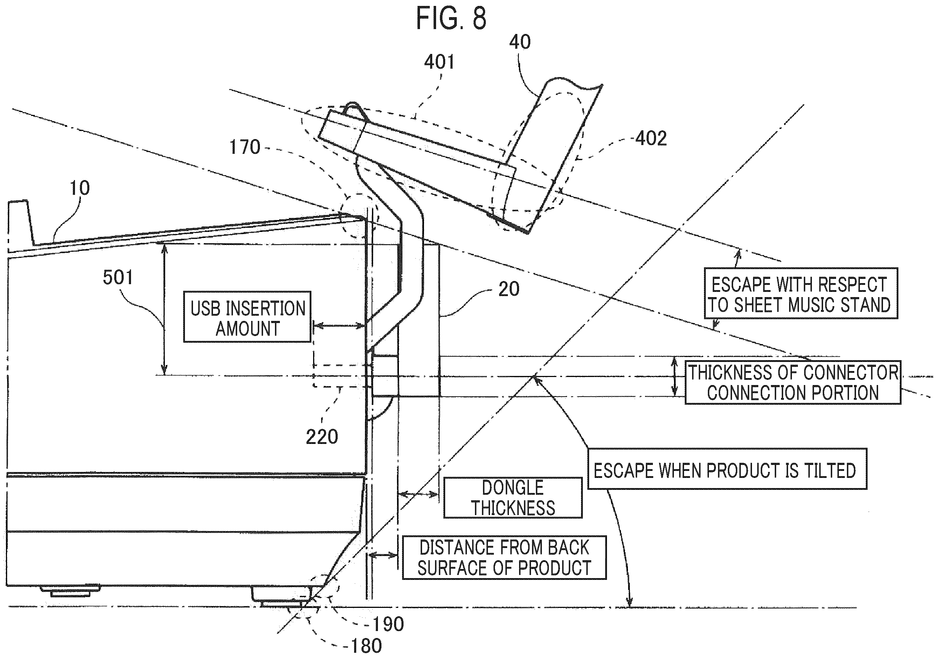

Fig. 8 is a diagram illustrating an example of a size of a dongle 20 according to an embodiment. In the present example, it is assumed that the dongle 20 is connected to the rear of the electronic musical instrument 10 (when the one with the keyboard 140k is the front).

Furthermore, in the present example, a sheet music stand 40 attachable to the electronic musical instrument 10 is illustrated. The sheet music stand 40 includes a sheet music receiving unit 401 that supports the sheet music and a sheet music placement unit 402 on which the surface portions of the sheet music are placed. Note that the sheet music receiving unit 401 may be referred to as a bottom surface of the sheet music stand 40, and the sheet music placement unit 402 may be referred to as a side surface of the sheet music stand 40.

In this example, regarding the L-shaped dongle 20 as illustrated in Fig. 7A, for example, it is assumed that an insertion amount of the USB connector 220 (which may be referred to as a USB insertion amount) is 10.7 mm (millimeters), a distance between a vertical surface of the dongle 20 with respect to the USB connector 220 (a side close to the electronic musical instrument 10) and a back surface of the electronic musical instrument 10 is 6.2 mm, and a thickness of a vertical portion (including the PCB 210 and the like) of the dongle 20 (which may be referred to as a dongle thickness) is 8.4 mm. In addition, it is assumed that the thickness of the connection portion of the USB connector 220 (which may be referred to as the thickness of the connector connection portion) is the same as the dongle thickness.

The uppermost point (or surface) of the dongle 20 connected to the electronic musical instrument 10 is preferably located at a level equal to or lower than the surface that extends from the upper side 170 at the rear of the electronic musical instrument 10 and is horizontal to the sheet music receiving unit 401. With this configuration, the escape (interval) of the dongle 20 with respect to the sheet music stand 40 can be suitably secured.

The lowest point (or surface) of the dongle 20 that is connected to the electronic musical instrument 10 is preferably positioned at or above a level of a surface horizontal to the rear ground contact portion (foot) 180 of the electronic musical instrument 10, and the rear side (back portion) 190 of the electronic musical instrument 10 that will contact the ground first when the electronic musical instrument 10 is tilted backward. This surface may have an angle of 45° with respect to the ground, for example. With this configuration, the escape (interval) of the dongle 20 at the time when the electronic musical instrument 10 is tilted backward can be suitably secured.

With these escapes, even when the electronic musical instrument 10 is moved or someone passes near the back surface of the electronic musical instrument 10, the dongle 20 connected to the electronic musical instrument 10 is less likely to touch something, and impact/breakage can be suitably avoided.

As shown in Fig. 8, the uppermost surface of the vertical portion of the dongle 20 may have a height up to a length 501 (for example, 27 mm) above the center height of the USB connector 220.

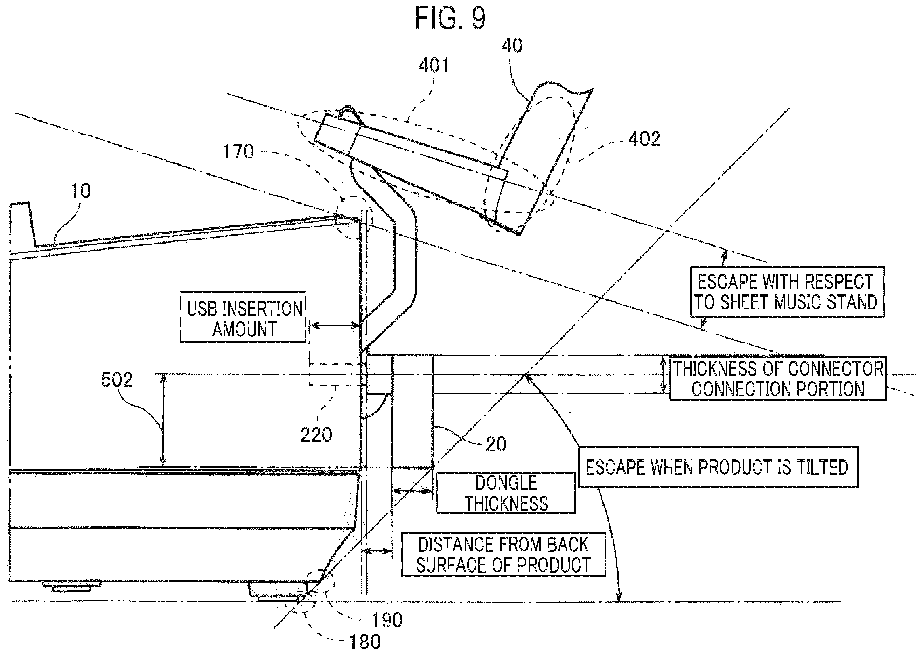

Fig. 9 is a diagram illustrating an example of a size of a dongle 20 according to an embodiment. The same matters as those in Fig. 8 will not be described again. Fig. 9 differs from Fig. 8 in that the dongle 20 is connected upside down. In this case, the lowest surface of the vertical portion of the dongle 20 may have a height up to a length 502 (for example, 19 mm) below the center height of the USB connector 220.

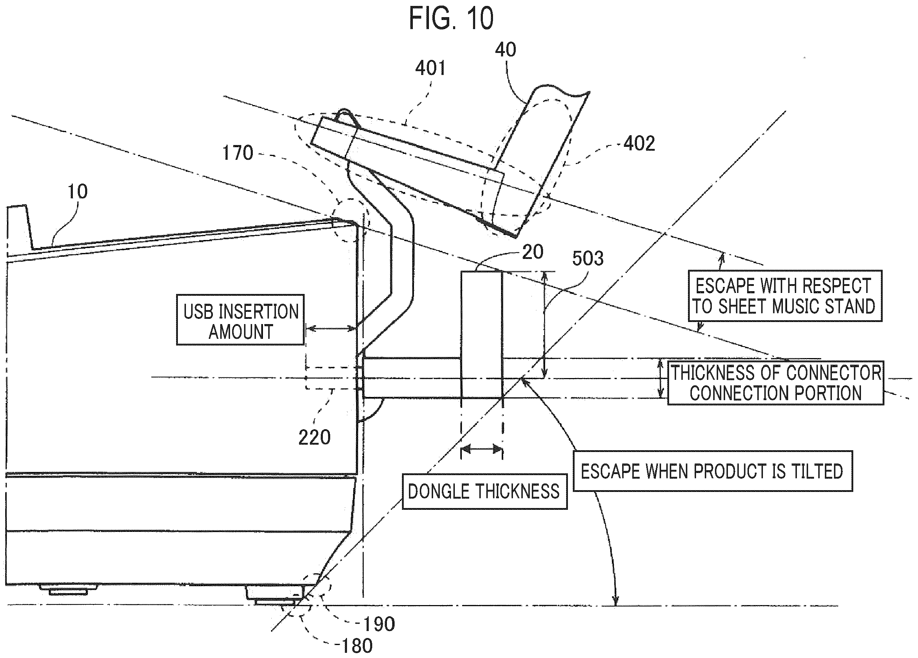

Fig. 10 is a diagram illustrating an example of a size of a dongle 20 according to an embodiment. The same matters as those in Fig. 8 will not be described again. Fig. 10 differs from Fig. 8 in that the horizontal portion of the dongle 20 is extended to the limit in consideration of ease of holding, design, and the like of the dongle 20. In this case, the uppermost surface of the vertical portion of the dongle 20 may have a height up to a length 503 (for example, 23 mm) above the center height of the USB connector 220.

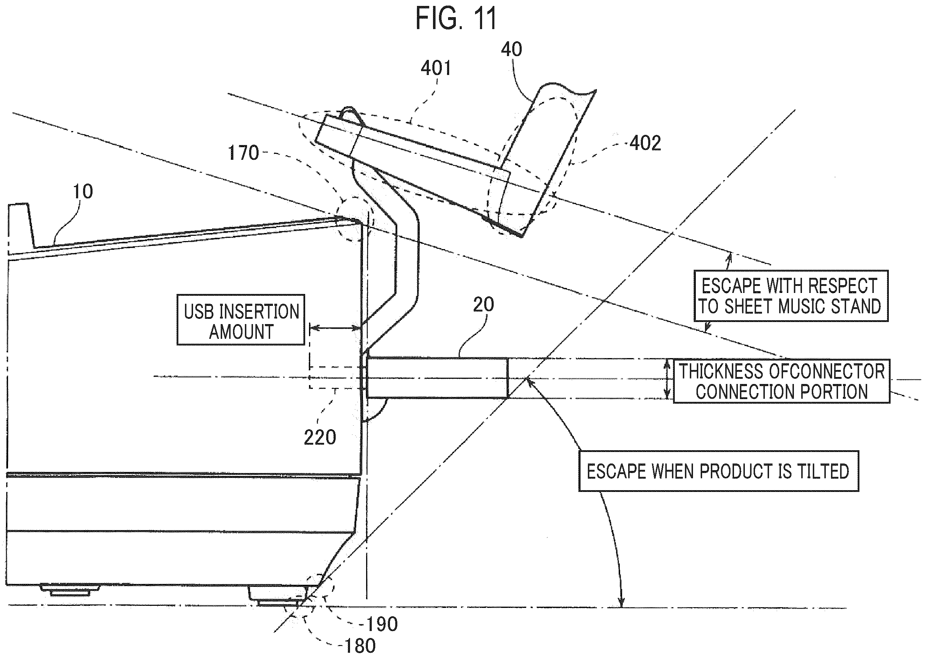

Fig. 11 is a diagram illustrating an example of a size of a dongle 20 according to an embodiment. The same matters as those in Fig. 8 will not be described again. Fig. 10 differs from Fig. 8 in that a dongle 20 in a straight-line type as illustrated in Fig. 6A is used. In this case, the lowest surface of a distal end portion of the dongle 20 is positioned at or above a level of a surface horizontal to a straight line (a surface 45° above from a horizontal line) connecting the rear ground contact portion (foot) 180 of the electronic musical instrument 10 with the rear side (back portion) 190 of the electronic musical instrument 10 that will contact the ground first when the electronic musical instrument 10 is tilted backward.

Note that each length illustrated in Figs. 8 to 11 is an example, and the present invention is not limited thereto.

### (Modified example)

In the above-described embodiment, an example in which the electronic musical instrument 10 is a keyboard musical instrument such as a keyboard has been described, but the present invention is not limited thereto. The electronic musical instrument 10 may be any instrument as long as it has a configuration to be able to designate the timing of sound production by a user's operation and may be an electric violin, an electric guitar, a drum, a trumpet, or the like.

Furthermore, the electronic musical instrument 10 is not limited to a so-called musical instrument (keyboard or the like), and may be read as a mobile phone, a smartphone, a tablet terminal, a personal computer (PC), a television, or the like.

Note that, in Fig. 1 and Figs. 8 to 11, the dongle 20 is connected to the rear of the electronic musical instrument 10 (when the one with the keyboard 140k is the front), but the present invention is not limited thereto. The dongle 20 may be connected to a USB connector on the front or side surface of the electronic musical instrument 10. In this case, the "rear" in the description of Figs. 8 to 11 may be read as front or side surface. In the present disclosure, the "side surface" can be read as any of the front side surface, the rear side surface, and the lateral side surface (that is, any side).

In addition, the sheet music stand 40 in the description of Figs. 8 to 11 may be any object connected to the electronic musical instrument 10, and the sheet music receiving unit 401 and the sheet music placement unit 402 may be read as the bottom surface and the side surface of the object, respectively.

As described above, by using the dongle 20 of the present disclosure, good communication between the electronic musical instrument 10 and the device 30 can be realized.

Note that a communication device for an electronic musical instrument (dongle 20) may include a board (PCB 210) on which an antenna that transmits and receives a radio signal (antenna unit 203/antenna 223), a radio communication module that mutually converts data and the radio signal (RF unit 202/RF chip 222), a control device that mutually converts the data and a signal for a certain interface (USB interface unit 201/USB chip 221), and a connector that transmits and receives the signal for the certain interface to and from an electronic musical instrument (USB connector 220)are disposed, in which the connector may be disposed such that a longitudinal direction of the connector is substantially perpendicular to a board surface (board surface/component surface 211) of the board. According to such a configuration, the dongle 20 that can communicate with the device 30 can be easily connected to and detached from the electronic musical instrument 10, and the directivity (radiation characteristics) of the antenna can be enhanced with respect to the horizontal direction as compared with the vertical direction of the electronic musical instrument 10 to which the USB connector 220 is connected.

Furthermore, a communication device for an electronic musical instrument (dongle 20) may include a board (PCB 210) on which an antenna that transmits and receives a radio signal (antenna unit 203/antenna 223), a radio communication module that mutually converts data and the radio signal (RF unit 202/RF chip 222), a control device that mutually converts the data and a signal for a certain interface (USB interface unit 201/USB chip 221), and a connector that transmits and receives the signal for the certain interface to and from an electronic musical instrument (USB connector 220)are disposed, in which the radio communication module converts a radio signal transmitted from a terminal device (device 30) and received via the antenna into at least one of MIDI data and audio data, and converts MIDI data transmitted from the electronic musical instrument into a radio signal for transmission to the terminal device via the antenna. According to such a configuration, for example, it is possible to provide a lesson system in which an electronic musical instrument acquires at least one of MIDI data and audio data of a song that is not built in the electronic musical instrument from an external terminal device via a communication device for the electronic musical instrument, the electronic musical instrument produces a sound on the basis of at least one of the acquired MIDI data and audio data of the song, and transmits MIDI data generated by the electronic musical instrument to the terminal device in response to performance of the electronic musical instrument by a user during the production, and the terminal device evaluates (scores) the performance of the user.

Furthermore, the dongle 20 may include the antenna provided on one end side in a longitudinal direction of the board, and the connector provided on the other end side. According to such a configuration, the range in which the antenna can transmit and receive the radio signal can be widened as much as possible when viewed from the electronic musical instrument 10 connected to the connector.

In addition, the signal for the certain interface may include a USB signal. According to such a configuration, the dongle 20 can realize suitable conversion between at least one of MIDI data and audio data and a USB signal.

Furthermore, the connector may be mounted on one of outer circumferences of the electronic musical instrument. According to such a configuration, the dongle 20 is suitably physically connected to the electronic musical instrument 10.

In addition, the electronic musical instrument system 1 may include the communication device for an electronic musical instrument described above, and the electronic musical instrument including a speaker (speaker 150s) that produces sound on a basis of at least one of MIDI data and audio data acquired via the communication device for an electronic musical instrument.

Additionally, at least one processor of a communication device for an electronic musical instrument (processor included in the USB chip 221 and the RF chip 222) may perform processing to convert a radio signal transmitted from a terminal device and received via an antenna into at least one of MIDI data and audio data, and to convert MIDI data transmitted from an electronic musical instrument into a radio signal for transmission to the terminal device via the antenna, to mutually convert at least one of the MIDI data and the audio data and a signal for a certain interface, and to transmit and receive the signal for the certain interface to and from the electronic musical instrument.

Each aspect/embodiment described in the present disclosure may be used alone, or may be used in combination, or may be switched due to execution. In addition, the order of the processing procedure, sequence, flowchart, and the like of each aspect/embodiment described in the present disclosure may be changed as long as there is no contradiction. For example, for the methods described in the present disclosure, elements of various steps are presented using an example order, and are not limited to the particular order presented.

As used in this disclosure, the description "on the basis of" does not mean "on the basis only of" unless explicitly stated otherwise. In other words, the description "on the basis of" means both "on the basis only of" and "on the basis at least of".

Any reference to elements using designations such as "first", "second", and the like as used in the present disclosure does not generally limit the amount or order of those elements. These designations may be used in the present disclosure as a convenient way to distinguish between two or more elements. Thus, reference to the first and second elements does not imply that only two elements may be employed or that the first element must in any way precede the second element.

Where the present disclosure uses the terms "include", "including", and variations thereof, these terms are intended to be inclusive in a manner similar to the term "comprising". Furthermore, the term "or" used in the present disclosure is intended not to be an exclusive OR.

"A/B" in the present disclosure may mean "at least one of A and B".

In the present disclosure, for example, in a case where articles such as a, an, and the in English are added by translation, the present disclosure may include a case where a noun following these articles is plural.

Although the invention according to the present disclosure has been described in detail above, it is obvious to those skilled in the art that the invention according to the present disclosure is not limited to the embodiments described in the present disclosure. The invention according to the present disclosure can be implemented as modifications and variations without departing from the spirit and scope of the invention defined based on the description of the claims. Therefore, the description of the present disclosure is for the purpose of illustration and does not bring any restrictive meaning to the invention according to the present disclosure.

## Claims

1. A communication device for an electronic musical instrument, comprising:
a board on which an antenna that transmits and receives a radio signal, a radio communication module that mutually converts data and the radio signal, a control device that mutually converts the data and a signal for a certain interface, and a connector that transmits and receives the signal for the certain interface to and from an electronic musical instrument are disposed, wherein
the connector is disposed such that a longitudinal direction of the connector is substantially perpendicular to a board surface of the board.

2. A communication device for an electronic musical instrument, comprising:
a board on which an antenna that transmits and receives a radio signal, a radio communication module that mutually converts data and the radio signal, a control device that mutually converts the data and a signal for a certain interface, and a connector that transmits and receives the signal for the certain interface to and from an electronic musical instrument are disposed, wherein
the radio communication module converts a radio signal transmitted from a terminal device and received via the antenna into at least one of Musical Instrument Digital Interface (MIDI (registered trademark)) data and audio data, and converts MIDI data transmitted from the electronic musical instrument into a radio signal for transmission to the terminal device via the antenna.

3. The communication device for an electronic musical instrument according to claim 1 or 2, wherein
the antenna is provided on one end side in a longitudinal direction of the board, and
the connector is provided on another end side.

4. The communication device for an electronic musical instrument according to any one of claims 1 to 3, wherein
the signal for the certain interface includes a Universal Serial Bus (USB) signal.

5. The communication device for an electronic musical instrument according to any one of claims 1 to 4, wherein
the connector is mounted on one of outer circumferences of the electronic musical instrument.

6. An electronic musical instrument system, comprising:
the communication device for an electronic musical instrument according to any one of claims 1 to 5; and
the electronic musical instrument including a speaker that produces sound on a basis of at least one of MIDI data and audio data acquired via the communication device for an electronic musical instrument.

7. A method of performing processing by at least one processor of a communication device for an electronic musical instrument, comprising:
converting a radio signal transmitted from a terminal device and received via an antenna into at least one of Musical Instrument Digital Interface (MIDI (registered trademark)) data and audio data, and converting MIDI data transmitted from an electronic musical instrument into a radio signal for transmission to the terminal device via the antenna;
mutually converting at least one of the MIDI data and the audio data and a signal for a certain interface; and
transmitting and receiving the signal for the certain interface to and from the electronic musical instrument.

8. A program of performing processing by at least one processor of a communication device for an electronic musical instrument, comprising:
converting a radio signal transmitted from a terminal device and received via an antenna into at least one of Musical Instrument Digital Interface (MIDI (registered trademark)) data and audio data, and converting MIDI data transmitted from an electronic musical instrument into a radio signal for transmission to the terminal device via the antenna;
mutually converting at least one of the MIDI data and the audio data and a signal for a certain interface; and
transmitting and receiving the signal for the certain interface to and from the electronic musical instrument.
